# EUROPÄISCHE PATENTSCHRIFT

(11) **EP 4 019 751 B1**
(45) Veröffentlichungstag und Bekanntmachung des Hinweises auf die Patenterteilung: **26.03.2025**
(21) Anmeldenummer: 21168069.9
(22) Anmeldetag: 13.04.2021
(51) Int. Cl.: F02B 25/04, F02D 19/06, F02D 19/10, F02D 41/00, F02D 41/30, F02D 41/40

(54) **VERFAHREN ZUM BETREIBEN EINES GROSSDIESELMOTORS, SOWIE GROSSDIESELMOTOR**
LARGE DIESEL ENGINE AND METHOD FOR OPERATING A LARGE DIESEL ENGINE
PROCÉDÉ DE FONCTIONNEMENT D'UN GRAND MOTEUR DIESEL, AINSI QUE GRAND MOTEUR DIESEL

(30) Priorität: 23.12.2020 CN 202011537492
(43) Veröffentlichungstag der Anmeldung: 29.06.2022
(73) Patentinhaber: WinGD AG, 8400 Winterthur (CH)
(72) Erfinder: Ott, Marcel, Pudong New District Shanghai, 201206 (CN); Zhongxiao, Wang, Pudong New District Shangha, 200129 (CN)
(74) Vertreter: IPS Irsch AG

(56) Entgegenhaltungen:
- JP-A- 2006 052 686
- JP-A- 2013 024 136
- JP-A- 2013 040 579
- JP-A- 2014 005 818
- US-B2- 9 556 818

## Beschreibung

Die Erfindung betrifft ein Verfahren zum Betreiben eines Grossdieselmotors, welcher als Dual-Fuel Grossdieselmotor ausgestaltet ist, sowie einen Grossdieselmotor gemäss dem Oberbegriff des unabhängigen Patentanspruchs der jeweiligen Kategorie.

Grossdieselmotoren werden klassischerweise mit Schweröl betrieben. Grossdieselmotoren, die als Zweitakt- oder als Viertakt-Maschinen ausgestaltet sein können, beispielsweise als längsgespülte Zweitakt-Grossdieselmotoren, werden häufig als Antriebsaggregate für Schiffe oder auch im stationären Betrieb, z.B. zum Antrieb grosser Generatoren zur Erzeugung elektrischer Energie eingesetzt. Dabei laufen die Motoren in der Regel über beträchtliche Zeiträume im Dauerbetrieb, was hohe Anforderungen an die Betriebssicherheit und die Verfügbarkeit stellt. Daher sind für den Betreiber insbesondere lange Wartungsintervalle, geringer Verschleiss und ein wirtschaftlicher Umgang mit den Betriebsstoffen zentrale Kriterien. Grossdieselmotoren haben typischerweise Zylinder, deren Innendurchmesser (Bohrung) mindestens 200 mm beträgt. Heutzutage werden Grossdieselmotoren mit einer Bohrung von bis zu 960 mm oder sogar noch mehr eingesetzt.

Unter den Aspekten des wirtschaftlichen und effizienten Betriebs, der Einhaltung von Abgasgrenzwerten und der Verfügbarkeit von Ressourcen sucht man heute auch bei Grossdieselmotoren nach Alternativen zu dem Brennstoff Schweröl. Dabei werden sowohl flüssige Brennstoffe eingesetzt, also Brennstoffe, die im flüssigen Zustand in den Brennraum eingebracht werden, als auch gasförmige Brennstoffe, also Brennstoffe, die im gasförmigen Zustand in den Brennraum eingebracht werden.

Beispiele für flüssige Brennstoffe als bekannte Alternativen zum Schweröl sind andere schwere Kohlenwasserstoffe, die insbesondere als Rückstände bei der Raffinerie von Erdöl übrig bleiben, Alkohole, insbesondere Methanol oder Ethanol, Benzin, Diesel, oder auch Emulsionen oder Suspensionen. So ist es z. B. bekannt, die als MSAR (Multiphase Superfine Atomised Residue) bezeichneten Emulsionen als Brennstoff zu verwenden. Eine bekannte Suspension ist diejenige aus Kohlenstaub und Wasser, die ebenfalls als Brennstoff für Grossmotoren eingesetzt wird. Als gasförmige Brennstoffe sind beispielsweise Erdgase wie LNG (liquefied natural gas), Flüssiggase wie LPG (liquefied petroleum gas) oder Ethan bekannt.

Es sind insbesondere auch solche Grossdieselmotoren bekannt, die mit mindestens zwei verschiedenen Brennstoffen betreibbar sind, wobei der Motor je nach Betriebssituation oder Umgebung entweder mit dem einen Brennstoff oder mit dem anderen Brennstoff betrieben wird.

Ein Beispiel für einen Grossdieselmotor, der mit zwei unterschiedlichen Brennstoffen betreibbar ist, ist ein Grossdieselmotor, der als Dual-Fuel Grossdieselmotor ausgestaltet ist. Dieser ist in einem Flüssigmodus betreibbar, in welchem ein flüssiger Brennstoff zur Verbrennung in den Zylinder eingebracht wird, sowie in einem Gasmodus, in welchem ein Gas als Brennstoff in den Zylinder eingebracht wird.

Grossdieselmotoren, die mit mindestens zwei oder auch mehr verschiedenen flüssigen oder gasförmigen Brennstoffen betrieben werden können, werden häufig, je nach aktuell verwendetem Brennstoff in unterschiedlichen Betriebsmodi betrieben. In dem häufig als Dieselbetrieb bezeichneten Betriebsmodus erfolgt die Verbrennung des Brennstoffs in der Regel nach dem Prinzip der Kompressionszündung oder Selbstzündung des Brennstoffs. In dem häufig als Ottobetrieb bezeichneten Modus erfolgt die Verbrennung durch die Fremdzündung eines zündfähigen vorgemischten Luft-Brennstoff-Gemisches. Diese Fremdzündung kann beispielsweise durch einen elektrischen Funken erfolgen, z. B. mit einer Zündkerze, oder auch durch die Selbstzündung einer kleinen eingespritzten Brennstoffmenge, welche dann die Fremdzündung eines anderen Brennstoffs bewirkt. Häufig wird dabei die für die Selbstzündung vorgesehene kleine Brennstoffmenge in eine mit dem Brennraum verbundene Vorkammer eingespritzt.

Ferner sind auch Mischformen aus dem Ottobetrieb und dem Dieselbetrieb bekannt.

Im Rahmen dieser Anmeldung sind mit dem Begriff "Grossdieselmotor" solche Motoren gemeint, die zumindest in einem Dieselbetrieb betrieben werden können. Insbesondere umfasst der Begriff "Grossdieselmotor" also auch solche Dual-Fuel Grossmotoren, die ausser im Dieselbetrieb auch noch in einem anderen Betrieb, beispielsweise dem Otto-Betrieb, betreibbar sind.

Im Rahmen dieser Anmeldung ist mit dem Begriff "Gasmodus" bzw. "Betrieb im Gasmodus" gemeint, dass nur das Gas bzw. der gasförmige Brennstoff für die drehmomenterzeugende Verbrennung als Brennstoff genutzt werden. Zwar ist es, wie bereits erwähnt, möglich und durchaus auch üblich, dass im Gasmodus für die Fremdzündung des vorgemischten Luft-Brennstoff-Gemisches eine geringe Menge eines selbstzündenden flüssigen Brennstoffs, z. B. Schweröl, eingespritzt wird, um die Fremdzündung auszuführen, aber dennoch wird der Verbrennungsprozess, welcher das Drehmoment erzeugt, vollständig mit dem Gas bzw. mit dem gasförmigen Brennstoff betrieben.

Dieser Vorgang der Fremdzündung durch Selbstzündung einer geringen Menge eines flüssigen Brennstoffs wird manchmal auch als Piloteinspritzung bezeichnet. Diese Piloteinspritzung hat nichts zu tun mit der Einspritzung des flüssigen Brennstoffs in den Brennraum, wenn der Grossmotor im Flüssigmodus betrieben wird. Für die Piloteinspritzung wird üblicherweise eine andere Einspritzvorrichtung genutzt als für das Einspritzen des flüssigen Brennstoffs im Flüssigmodus. Häufig wird zudem bei der Piloteinspritzung die geringe Menge des flüssigen Brennstoffs auch nicht direkt in den Brennraum eingespritzt, sondern in mindestens eine Vorkammer, die über einen Kanal mit dem Brennraum verbunden ist.

Auch ist es bekannt, einen solchen Grossdieselmotor im Gasmodus mit einem Niederdruckverfahren zu betreiben, d.h. das Gas wird im gasförmigen Zustand in den Zylinder eingebracht, wobei der Einspritzdruck des Gases höchstens 50 bar vorzugsweise höchstens 20 bar beträgt. Dazu ist in der Zylinderwandung mindestens eine Gaseinlassöffnung vorgesehen, durch welche im Gasmodus das Gas in den Zylinder eingebracht wird. In der Praxis sind häufig zwei Gaseinlassöffnungen vorgesehen, die sich bezüglich der Zylinderachse diametral gegenüberliegen. Die Gaseinlassöffnung(en) sind dabei auf einer solchen Höhe zwischen dem unteren Umkehrpunkt und dem oberen Umkehrpunkt der Kolbenbewegung angeordnet, dass das Gas bei der Aufwärtsbewegung des Kolbens in den Zylinder eingebracht werden kann, solange noch keine oder zumindest keine wesentliche Kompression im Zylinder erfolgt ist.

Die Gaseinbringung muss spätestens kurz vor dem Zeitpunkt beendet sein, wenn der Kolben bei seiner Aufwärtsbewegung die Gaseinlassöffnung(en) passiert.

JP 2014 005818 A beschreibt ein Verfahren zum Betreiben eines Grossmotors gemäß des Oberbegriffs des Anspruchs 1.

Ein Problem beim Betrieb im Gasmodus ist es, dass mit zunehmender Kompression nach dem Schliessen des Auslassventils und nach Beendigung der Gaseinbringung das Gas auch in den Bereich zwischen dem Kolben und der Zylinderwandung, an welcher der Kolben bei seiner Hubbewegung entlang läuft, gepresst wird. Dieser Spalt zwischen dem oberen Bereich des Kolbens und der Zylinderwandung wird nach unten hin durch einen Kolbenring begrenzt. Im Falle, dass mehrere Kolbenringe vorgesehen sind, ist es der erste Kolbenring, also derjenige, der am nächsten zum Brennraum angeordnet ist, welcher den spaltförmigen Bereich zwischen dem oberen Bereich des Kolbens und der Zylinderwandung nach unten begrenzt. Da dieser spaltförmige Bereich auch mit Gas gefüllt ist, bzw. mit dem gasförmigen Brennstoff, wird der Kolbenring bzw. der erste Kolbenring beim Verbrennungsprozess einer sehr hohen thermischen Belastung ausgesetzt, was zu einem verstärkten Verschleiss oder zu anderen thermisch bedingten Degradationen des Kolbenrings führt. Ähnliche thermisch bedingte Probleme können auch an oder in den Kolbennuten auftreten, in welchen die Kolbenringe und insbesondere der erste Kolbenring angeordnet sind/ist.

Diesem Problem widmet sich die vorliegende Erfindung.

Es ist daher eine Aufgabe der Erfindung, ein Verfahren zum Betreiben eines Grossdieselmotors vorzuschlagen, welcher als Dual-Fuel Grossdieselmotor ausgestaltet ist, der auch in einem Gasmodus betreibbar bis, bei welchem Verfahren im Gasmodus die thermische Belastung insbesondere des Kolbenrings bzw. des ersten Kolbenrings deutlich reduziert wird. Ferner ist es eine Aufgabe der Erfindung, einen Grossdieselmotor vorzuschlagen, der mit einem solchen Verfahren betrieben wird.

Die diese Aufgabe lösenden Gegenstände der Erfindung sind durch die Merkmale des unabhängigen Patentanspruchs der jeweiligen Kategorie gekennzeichnet.

Erfindungsgemäss wird also ein Verfahren zum Betreiben eines Grossdieselmotors vorgeschlagen, welcher als Dual-Fuel Grossdieselmotor ausgestaltet ist, der in einem Flüssigmodus betreibbar ist, in welchem ein flüssiger Brennstoff zur Verbrennung in einen Zylinder eingebracht wird, und der ferner in einem Gasmodus betreibbar ist, in welchem ein Gas als Brennstoff in den Zylinder eingebracht wird, wobei der Grossdieselmotor mindestens einen Zylinder umfasst, in welchem ein Kolben entlang einer Zylinderwandung in einer axialen Richtung zwischen einem unteren Umkehrpunkt und einem oberen Umkehrpunkt hin- und herbewegbar angeordnet ist, wobei der Kolben eine Oberseite zum Begrenzen eines Brennraums im Zylinder aufweist, wobei in der Zylinderwandung mindestens eine Gaseinlassöffnung vorgesehen ist, durch welche im Gasmodus das Gas als Brennstoff in den Zylinder eingebracht wird, wobei im Gasmodus das Einbringen des Gases bei einem Einlassabstand beendet wird, wobei der Einlassabstand die Entfernung der Oberseite des Kolbens von der Gaseinlassöffnung in axialer Richtung angibt, und wobei der Einlassabstand, mindestens 14% des Hubs beträgt, welcher durch die Differenz der Position der Oberseite des Kolbens im oberen Umkehrpunkt und im unteren Umkehrpunkt festgelegt ist.

Bei dem erfindungsgemässen Verfahren wird also im Gasmodus das Einbringen des Gases in den Zylinder bereits sehr früh - bezogen auf die Kolbenbewegung vom unteren zum oberen Umkehrpunkt - beendet. Der gesamte Prozess des Einbringens des Gases erfolgt also bezogen auf die Kolbenposition deutlich früher, also wenn die Oberseite des Kolbens bezüglich der axialen Richtung noch weit von der Gaseinlassöffnung entfernt ist. Durch diese Massnahme existiert bei der Beendigung des Gaseinlasses noch ein Luftpolster, welches zwischen der Oberseite des Kolbens und dem eingespritzten Gas angeordnet ist. Bei der weiteren Kompressionsbewegung des Kolbens wird auch dieses Lustpolster komprimiert und verhindert insbesondere, dass das Gas in den spaltförmigen Bereich zwischen dem Kolben und der Zylinderwandung gepresst wird. Der obere Bereich des Kolbens, also insbesondere seine Oberseite und die Kolbennut(en), sowie der erste Kolbenring sind durch dieses Luftpolster wesentlich besser gegen die Wärme geschützt, welche beim Verbrennungsprozess generiert wird. Somit bleibt insbesondere der erste Kolbenring wesentlich kühler, wodurch thermisch bedingter Verschleiss oder thermisch bedingte Degradationen erheblich reduziert werden.

Das Schliessen des Auslassventils wird vorzugsweise derart angepasst, dass ein direkter Schlupf des eingebrachten Gases von der Gaseinlassöffnung durch das Auslassventil in das Abgassystem -zumindest so weit wie möglich- und vorzugsweise vollständig vermieden wird.

Der optimale Einlassabstand, bei welchem das Einbringen des Gases vorzugsweise spätestens beendet wird, ist von der konkreten Ausgestaltung und insbesondere auch von der Geometrie des Zylinders abhängig, beispielsweise dem Hub des Kolbens, oder dem Abstand der Gaseinlassöffnung in axialer Richtung vom unteren Umkehrpunkt. Aber auch Betriebsparameter des Grossmotors, beispielsweise die Last, bei welcher der Motor betrieben wird, können einen Einfluss auf den optimalen Einlassabstand haben. Im Folgenden werden einige bevorzugte Grenzen für den Einlassabstand angegeben, die sich für verschiedene Anwendungsfälle bewährt haben.

Bei manchen Anwendungen des erfindungsgemässen Verfahrens ist es vorteilhaft, wenn der Einlassabstand mindestens 18% des Hubs beträgt.

Bei manchen Anwendungen des erfindungsgemässen Verfahrens ist es vorteilhaft, wenn der Einlassabstand mindestens 20% des Hubs beträgt.

Bei manchen Anwendungen des erfindungsgemässen Verfahrens ist es vorteilhaft, wenn der Einlassabstand mindestens 23% des Hubs beträgt.

Bei manchen Anwendungen des erfindungsgemässen Verfahrens ist es vorteilhaft, wenn der Einlassabstand mindestens 26% des Hubs beträgt.

Bei manchen Anwendungen des erfindungsgemässen Verfahrens ist es vorteilhaft, wenn der Einlassabstand mindestens 29% des Hubs beträgt.

Andererseits hat es sich auch als vorteilhaft erwiesen, wenn der Einlassabstand nicht zu gross gewählt wird, weil bei einer sehr frühen Einbringung des Gases die Gefahr besteht, dass vor dem Schliessen des Auslassventils eine zu grosse Menge des eingebrachten Gases durch den Spülprozess zusammen mit den Abgasen durch das Auslassventil ausgetragen wird. Dies kann dann zu dem als Methan-Schlupf bekannten Problem führen. Methan ist typischerweise in einem hohen Prozentsatz in solchen gasförmigen Brennstoffen vorhanden, die im Gasmodus üblicherweise als Brennstoff verwendet werden. Wenn Methan im unverbrannten Zustand in das Abgassystem gelangt, nimmt die Methan Konzentration im Abgas erheblich zu. Da Methan als eine sehr umweltschädliche Substanz bekannt ist, wird angestrebt, den Methan-Schlupf so weit wie möglich zu vermeiden. Methan ist ein überaus wirksames Treibhausgas, das bekannterweise mindestens 25 mal wirksamer ist als Kohlendioxid, was einen signifikant negativen Einfluss auf die Berechnung des sogenannten "Energy Efficiency Design Index" (EEDI) haben kann und sich somit negativ im Hinblick auf einen effizienten und schadstoffarmen Betrieb des Motors auswirkt.

Daher ist es bevorzugt, dass der Einlassabstand höchstens 35% des Hubs beträgt.

Bei manchen Anwendungen ist es bevorzugt, dass der Einlassabstand höchstens 33% des Hubs beträgt.

Gemäss einer bevorzugten Ausführungsform wird mit dem Einbringen des Gases bei einem Einlasswinkel begonnen, wobei der Einlasswinkel denjenigen Kurbelwinkel angibt, bei welchem mit dem Öffnen der Gaseinlassöffnung begonnen wird, und wobei der Einlasswinkel 10° bis 25° kleiner ist als der Kurbelwinkel, bei welchem sich der Kolben im Einlassabstand befindet.

Bei manchen Anwendungen ist es bevorzugt, dass der Einlasswinkel 15° bis 20° kleiner ist als der Kurbelwinkel, bei welchem sich der Kolben im Einlassabstand befindet.

Eine weitere bevorzugte Massnahme, die insbesondere im Teillastbetrieb bei niedrigen oder tiefen Lasten von beispielsweise weniger als 50% der Volllast vorteilhaft ist, besteht darin, dass ein Auslassventil zum Austragen von Verbrennungsgasen aus dem Zylinder geschlossen wird, bevor mit der Einbringung des Gases in den Zylinder begonnen wird. Hierdurch lässt es sich vermeiden, dass das eingebrachte Gas oder Teile davon wieder direkt in das Abgassystem ausgetragen werden, bevor der Verbrennungsprozess im Brennraum stattgefunden hat.

Besonders bevorzugt sind zwei Gaseinlassöffnungen vorgesehen, welche auf der gleichen Höhe bezüglich der axialen Richtung angeordnet sind. Dabei ist es speziell bevorzugt, dass die beiden Gaseinlassöffnungen diametral gegenüberliegend in der Zylinderwandung angeordnet sind.

Ferner ist es bevorzugt, dass jede Gaseinlassöffnung bezüglich der axialen Richtung auf einer Höhe angeordnet ist, die 40% bis 55% des Hubs beträgt, wobei die Höhe von der Position der Oberseite des Kolbens gemessen wird, wenn sich der Kolben im unteren Umkehrpunkt befindet.

Durch die Erfindung wird ferner ein Grossdieselmotor vorgeschlagen, welcher mit einem erfindungsgemässen Verfahren betrieben wird.

Vorzugsweise ist der Grossdieselmotor als längsgespülter Zweitakt-Grossdieselmotor ausgestaltet.

Weitere vorteilhafte Massnahmen und Ausgestaltungen der Erfindung ergeben sich aus den abhängigen Ansprüchen.

Im Folgenden wird die Erfindung anhand von Ausführungsbeispielen und anhand der Zeichnung näher erläutert. In der Zeichnung zeigt:
- Fig. 1:: eine schematische Schnittdarstellung eines Zylinders eines Ausführungsbeispiels eines erfindungsgemässen Grossdieselmotors, und
- Fig. 2:: wie Fig. 1, jedoch mit dem Kolben im Einlassabstand.

Mit dem Begriff "Grossdieselmotor" sind solche Motoren gemeint, wie sie üblicherweise als Hauptantriebsaggregate für Schiffe oder auch im stationären Betrieb, z.B. zum Antrieb grosser Generatoren zur Erzeugung elektrischer Energie eingesetzt werden. Typischerweise haben die Zylinder eines Grossdieselmotors jeweils einen Innendurchmesser (Bohrung), der mindestens etwa 200 mm beträgt. Mit dem Begriff "längsgespült" ist gemeint, dass die Spül- oder Ladeluft im Bereich des unteren Endes in den Zylinder eingebracht wird.

Bei der folgenden Beschreibung der Erfindung wird auf einen Grossdieselmotor Bezug genommen, der als Dual-Fuel Grossdieselmotor ausgestaltet ist, also als ein Motor, der mit zwei unterschiedlichen Brennstoffen betrieben werden kann. Im Speziellen kann der Dual-Fuel Grossdieselmotor in einem Flüssigmodus betrieben werden, in welchem nur ein flüssiger Brennstoff in einen Brennraum eines Zylinders eingespritzt wird. Üblicherweise wird der flüssige Brennstoff, beispielsweise Schweröl oder ein Dieselöl, zu einem geeigneten Zeitpunkt direkt in den Brennraum eingespritzt und entzündet sich dort nach dem Diesel-Prinzip der Selbstzündung. Der Grossdieselmotor kann auch in einem Gasmodus betrieben werden, bei dem ein als Brennstoff dienendes Gas, beispielsweise ein Erdgas wie LNG (Liquefied Natural Gas) oder LPG (Liquefied Petroleum Gas) oder Ethan, in Form eines vorgemischten Luft-Brennstoff-Gemisches im Brennraum zur Zündung gebracht wird.

Wie vorangehend bereits erläutert, ist der Begriff "Gasmodus" bzw. "Betrieb im Gasmodus" im Rahmen dieser Anmeldung so zu verstehen, dass der Grossdieselmotor in diesem Gasmodus nur mit Gas bzw. mit einem gasförmigen Brennstoff betrieben wird, wobei optional eine geringe Menge eines selbstzündenden Brennstoffs, z.B. Schweröl oder Dieselöl, lediglich zur Fremdzündung des Luft-Gas-Gemisches in den Brennraum oder eine Vorkammer oder mehrerer Vorkammern eingebracht wird (Piloteinspritzung).

Im Speziellen arbeitet der Grossdieselmotor im Gasmodus nach einem Niederdruckverfahren, d.h. das Gas wird im gasförmigen Zustand in den Zylinder eingebracht, wobei der Einspritzdruck, mit welchem das Gas in den Zylinder eingebracht wird, höchstens 50 bar und vorzugsweise höchstens 20 bar beträgt. Das Luft-Gas-Gemisch wird im Brennraum nach dem Otto-Prinzip fremdgezündet. Diese Fremdzündung wird vorzugsweise dadurch bewirkt, dass zu einem geeigneten Moment eine kleine Menge selbstzündender flüssiger Brennstoff (z. B. Diesel- oder Schweröl) in den Brennraum oder in eine Vorkammer oder in mehrere Vorkammern eingebracht wird, der sich dann selbst entzündet und dadurch die Fremdzündung des Luft-Brennstoff-Gemisches im Brennraum verursacht.

Bei dem hier beschriebenen Ausführungsbeispiel wird auf einen Grossdieselmotor Bezug genommen, der als längsgespülter Dual-Fuel Zweitakt-Grossdieselmotor mit Kreuzkopfantrieb ausgestaltet ist.

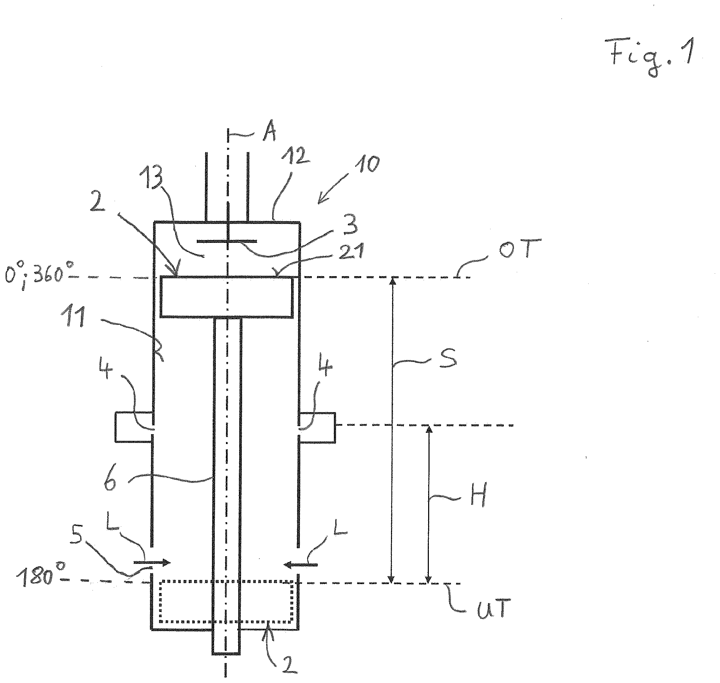

Fig. 1 zeigt in einer stark schematisierten Darstellung einen Zylinder der mehreren Zylinder dieses Ausführungsbeispiels eines Grossdieselmotors, wobei der Zylinder gesamthaft mit dem Bezugszeichen 10 bezeichnet ist. Im Inneren des Zylinders 10 ist in an sich bekannter Art ein Kolben 2 angeordnet, welcher entlang einer Zylinderwandung 11 in einer axialen Richtung A zwischen einem unteren Umkehrpunkt UT und einem oberen Umkehrpunkt OT hin- und herbewegbar angeordnet ist. Die axiale Richtung A ist durch die Zylinderachse des Zylinders 10 festgelegt.

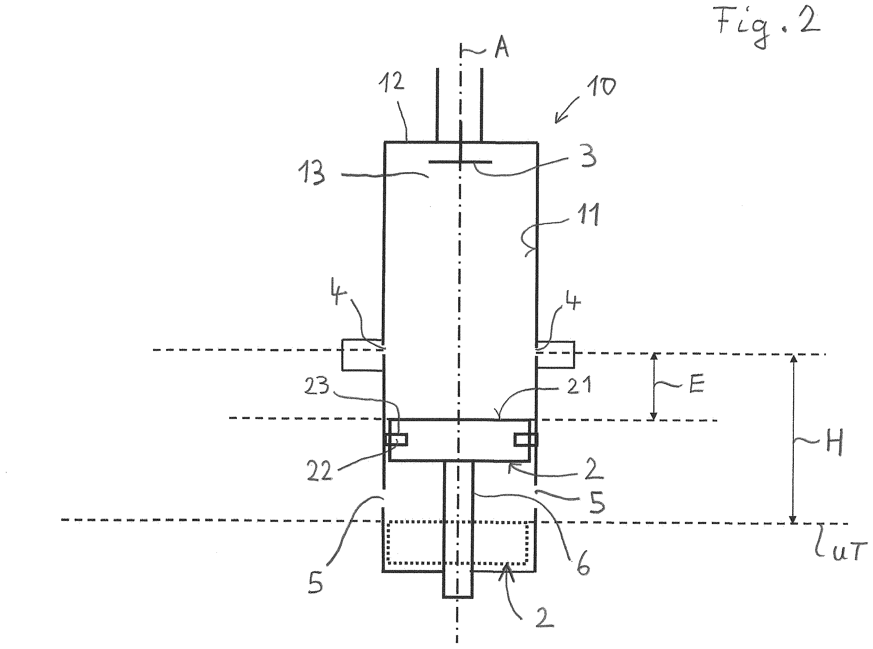

Der Kolben 2 hat eine Oberseite 21, welche gemeinsam mit einem Zylinderdeckel 12 einen Brennraum 13 begrenzt, in welchem der Verbrennungsprozess stattfindet. Der Kolben 2 weist mindestens einen ersten Kolbenring 22 (Fig. 2), aber typischerweise mehrere Kolbenringe auf, von denen jeder jeweils in einer Kolbennut 23 angeordnet ist, welche sich entlang des Umfangs des Kolbens 2 erstreckt.

Wie das von einem Kreuzkopfantrieb bekannt ist, ist der Koben 2 über eine Kolbenstange 6 mit einem Kreuzkopf (nicht dargestellt) verbunden, welcher über eine Schubstange (nicht dargestellt) mit einer Kurbelwelle (nicht dargestellt) verbunden ist, sodass die Bewegung des Kolbens 2 über die Kolbenstange 6, den Kreuzkopf und die Schubstange auf die Kurbelwelle übertragen wird, um diese zu drehen.

Der Aufbau und die einzelnen Komponenten des Grossdieselmotors, wie beispielsweise das Einspritzsystem für den Flüssigmodus (nicht dargestellt), das Gaszuführsystem für den Gasmodus, das Gaswechselsystem, das Abgassystem (nicht dargestellt) oder das Turboladersystem (nicht dargestellt) für die Bereitstellung der Spül- bzw. Ladeluft, sowie das Kontroll- und Steuerungssystem (nicht dargestellt) für einen solchen Grossdieselmotor sind dem Fachmann sowohl für die Ausgestaltung als Zweitaktmotor als auch für die Ausgestaltung als Viertaktmotor hinlänglich bekannt und bedürfen daher hier keiner weiteren Erläuterung.

Da es für das Verständnis der Erfindung ausreicht, ist von diesen Komponenten in Fig. 1 nur ein Auslassventil 3 dargestellt sowie zwei Gaseinlassöffnungen 4, durch welche im Gasmodus das als Brennstoff dienende Gas in den Zylinder 10 eingebracht wird. Die beiden Gaseinlassöffnungen 4 sind in der Zylinderwandung 11 angeordnet, vorzugsweise derart, dass sie sich diametral gegenüber liegen. In anderen Ausführungsformen können natürlich auch nur eine Gaseinlassöffnung 4 oder auch mehr als zwei Gaseinlassöffnungen 4 vorgesehen sein. Auch ist es möglich, Gaseinlassöffnungen auf verschiedenen Höhen bezüglich der axialen Richtung A vorzusehen.

Das Kontroll- und Steuerungssystem ist in modernen Grossdieselmotoren ein elektronisches System, mit welchem sich üblicherweise alle Motor- oder Zylinderfunktionen, insbesondere die Einspritzung (Beginn und Ende der Einspritzung) sowohl im Gasmodus als auch im Flüssigmodus, und die Betätigung des Auslassventils einstellen oder steuern bzw. regeln lassen.

Bei dem hier beschriebenen Ausführungsbeispiel eines längsgespülten Zweitakt-Grossdieselmotors sind üblicherweise im unteren Bereich eines jeden Zylinders 10 bzw. Zylinderliners Spülluftschlitze 5 vorgesehen, die durch die Bewegung des Kolbens 2 im Zylinder 10 periodisch verschlossen und geöffnet werden, sodass die von einem Turbolader unter einem Ladeluftdruck in einem Einlassreceiver (nicht dargestellt) bereitgestellte Spülluft durch die Spülluftschlitze 5 in den Zylinder 10 einströmen kann, solange diese geöffnet sind. Dies ist in Fig. 1 durch die beiden mit dem Bezugszeichen L versehenen Pfeile angedeutet. Im Zylinderkopf bzw. im Zylinderdeckel 12 ist das meistens zentral angeordnete Auslassventil 3 vorgesehen, durch welches die Verbrennungsgase nach dem Verbrennungsprozess aus dem Zylinder 10 in das Abgassystem (nicht dargestellt) ausgetragen werden können. Das Abgassystem leitet zumindest einen Teil der Verbrennungsgase zu einer Turbine (nicht dargestellt) des Turboladers, dessen Kompressor die Ladeluft im Einlassreceiver unter dem Ladeluftdruck bereitstellt.

Für das Einbringen des flüssigen Brennstoffs in den Brennraum 13 des Zylinders 10 im Flüssigmodus sind ein oder mehrere Brennstoffeinspritzdüsen vorgesehen (nicht dargestellt), die beispielsweise im Zylinderdeckel 12 in der Nähe des Auslassventils 3 angeordnet sind. Als flüssiger Brennstoff kann im Flüssigmodus beispielsweise Schweröl oder ein Dieselöl verbrannt werden.

Für die Gaszuführung bzw. das Einbringen des Gases im Gasmodus ist ein an sich bekanntes Gaszuführsystem vorgesehen, von welchem in Fig. 1 und Fig. 2 nur die beiden Gaseinlassöffnungen 4 dargestellt sind. Die Gaseinlassöffnungen 4 sind vorzugsweise jeweils als Gaseinlassventil mit einer Gaseinlassdüse ausgestaltet.

Fig. 1 zeigt mit einer durchgezogenen Linie die Position des Kolbens 2, wenn er sich im oberen Umkehrpunkt OT befindet, und mit einer gepunkteten Linie die Position des Kolbens 2, wenn er sich im unteren Umkehrpunkt UT befindet. Der Abstand zwischen derjenigen Position bezüglich der axialen Richtung A, an welcher sich die Oberseite 21 des Kolbens 2 befindet, wenn der Kolben 2 im oberen Umkehrpunkt OT ist, und derjenigen Position, an welcher sich die Oberseite 21 des Kolbens 2 befindet, wenn der Kolben 2 im unteren Umkehrpunkt UT ist, wird als Hub S bezeichnet. Dieser Abstand zwischen dem oberen Umkehrpunkt OT und dem unteren Umkehrpunkt UT, welche den Hub S definiert, kann in Grossdieselmotoren mehrere Meter betragen, beispielsweise bis zu über drei Meter.

In Fig. 1 sind zusätzlich an der linken Seite verschiedene Kurbelwinkel angegeben. Der Kurbelwinkel gibt die Stellung der Kurbelwelle an und kennzeichnet in an sich bekannter Weise den Arbeitszyklus des Grossdieselmotors. Bei dem Kurbelwinkel von 180° befindet sich der Kolben 2 im unteren Umkehrpunkt UT, der auch als unter Totpunkt bezeichnet wird; bei dem Kurbelwinkel von 360° befindet sich der Kolben 2 im oberen Umkehrpunkt OT, der auch als oberer Totpunkt bezeichnet wird. Bei der Ausgestaltung als Zweitaktmotor umfasst ein kompletter Arbeitszyklus 360°. Beginnend bei dem Kurbelwinkel von 0°, bei welchem der Kolben 2 in der gleichen Position ist wie bei dem Kurbelwinkel von 360°, nämlich im oberen Umkehrpunkt OT, bewegt sich der Kolben 2 beim Expansionshub nach unten, bis er bei 180° den unteren Umkehrpunkt UT erreicht. Beim anschliessenden Kompressionshub bewegt sich der Kolben 2 wieder nach oben, bis er wieder den oberen Umkehrpunkt OT bei 360° erreicht. Die Fremd- oder Selbstzündung des Brennstoffs erfolgt typischerweise kurz bevor der Kolben 2 beim Kompressionshub den oberen Umkehrpunkt OT erreicht.

Die vorliegende Erfindung bezieht sich insbesondere auf den Betrieb des Grossdieselmotors im Gasmodus.

Die Gaseinlassöffnungen 4 sind in der Zylinderwandung 11 auf einer Höhe H angeordnet, die bezüglich der axialen Richtung A ungefähr in der Mitte zwischen dem oberen Umkehrpunkt OT und dem unteren Umkehrpunkt UT des Kolbens 2 liegt. Die Höhe H gibt den Abstand in axialer Richtung A zwischen der Gaseinlassöffnung 4 und der Oberseite 21 des Kolbens 2 an, wenn sich der Kolben 2 im unteren Umkehrpunkt UT befindet. Da der Absolutwert dieses Abstandes natürlich von der spezifischen Ausgestaltung des Grossdieselmotors abhängt, insbesondere auch vom Hub S, wird die Höhe H in Prozent des Hubs S angegeben.

Wenn also beispielsweise die Höhe H 50% beträgt, dann ist die Gaseinlassöffnung 4 bezüglich der axialen Richtung A genau in der Mitte zwischen der Position der Oberseite 21 des Kolbens 2 im oberen Umkehrpunkt OT und der Position der Oberseite 21 des Kolbens 2 im unteren Umkehrpunkt UT angeordnet. Ist die Höhe H kleiner als 50%, so ist die Gaseinlassöffnung 4 bezüglich der axialen Richtung A näher am unteren Umkehrpunkt UT angeordnet. Ist die Höhe H grösser als 50%, so ist die Gaseinlassöffnung 4 bezüglich der axialen Richtung A näher am oberen Umkehrpunkt OT angeordnet.

Auf welcher Höhe H die Gaseinlassöffnung 4 im konkreten Anwendungsfall angeordnet wird, hängt unter anderem auch von dem vorhandenen Platz für das Gaszuführsystem am oder in der Nähe des Zylinders 10 ab. Für viele Anwendungsfälle hat es sich bewährt, dass die Gaseinlassöffnung(en) 4 bezüglich der axialen Richtung A auf einer Höhe H angeordnet wird/werden, die mindestens 40% und höchstens 55% des Hubs S beträgt.

Erfindungsgemäss wird beim Betrieb des Grossdieselmotors im Gasmodus das Einbringen des Gases bei einem Einlassabstand E beendet, wobei der Einlassabstand E die Entfernung der Oberseite des Kolbens 2 von der Gaseinlassöffnung 4 in axialer Richtung A angibt, und wobei der Einlassabstand E mindestens 14% des Hubs S beträgt.

Dies wird nun im Folgenden anhand des in Fig. 1 und Fig. 2 dargestellten Ausführungsbeispiels näher erläutert.

Fig. 2 zeigt mit einer durchgezogenen Linie den Kolben 2 im Einlassabstand E, also die Position des Kolbens 2, wenn im jeweiligen Arbeitszyklus das Einbringen des Gases in den Zylinder 10 gerade beendet ist. Damit ist derjenige Zeitpunkt gemeint, zu welchem die Gaseinlassöffnung 4 nach dem Schliessvorgang der Gaseinlassöffnung 4 gerade vollständig verschlossen ist, sodass kein Gas mehr in den Zylinder 10 einströmt. Ferner zeigt Fig. 2 mit einer gepunkteten Linie die Position des Kolbens 2, wenn er sich im unteren Umkehrpunkt UT befindet.

Ist die Gaseinlassöffnung 4 beispielsweise als ein Gaseinlassventil ausgestaltet, welches einen Ventilkörper umfasst, der zum Öffnen durch eine Hubbewegung aus einem Ventilsitz abgehoben wird, und der zum Schliessen durch eine Hubbewegung in den Ventilsitz gedrückt wird, sodass er dichtend mit dem Ventilsitz zusammenwirkt, so ist der Einlassabstand E der Abstand in axialer Richtung A zwischen der Oberseite 21 des Kolbens 2 und der Gaseinlassöffnung 4 zu demjenigen Zeitpunkt, wenn der Ventilkörper gerade wieder vollständig in den Ventilsitz eingeführt ist und dichtend mit diesem zusammenwirkt, sodass kein Gas mehr durch die Gaseinlassöffnung 4 in den Zylinder 10 einströmen kann.

Mit dem Beginn der Gaseinbringung ist in sinngemäss gleicher Weise der Zeitpunkt bzw. die Position des Kolbens 2 gemeint, wenn die Gaseinbringung in den Zylinder 10 gerade beginnt, wenn also beispielsweise das Abheben des Ventilkörpers aus dem Ventilsitz durch eine Hubbewegung des Ventilkörpers gerade beginnt.

Wenn der Ventilkörper beispielsweise einen maximalen Hub von 100% hat, wobei 100% Hub der Stellung des Ventilkörpers entspricht, bei welchem die Gaseinlassöffnung 4 vollständig geöffnet ist, und 0% Hub der Stellung des Ventilkörpers entspricht, bei welcher er dichtend mit dem Ventilsitz zusammenwirkt, so ist der Beginn der Gaseinbringung der Zeitpunkt, bei welcher der Hub des Ventilkörpers gerade beginnt von 0% zu steigen. Das Ende der Gaseinbringung ist dann der Zeitpunkt, bei welchem der Hub des Ventilkörpers gerade wieder den Wert 0% annimmt.

Sinngemäss gleiches gilt auch für andere Ausgestaltungen der Gaseinlassöffnung(en) 4. Als Beginn der Gaseinbringung wird der Zeitpunkt (oder die Position des Kolbens 2 gemessen durch den Kurbelwinkel) bezeichnet, wenn der Fluss des Gases durch die Gaseinlassöffnung(en) 4 gerade beginnt. Als Ende der Gaseinbringung wird der Zeitpunkt (oder die Position des Kolbens 2 gemessen durch den Kurbelwinkel) bezeichnet, wenn der Fluss des Gases durch die Gaseinlassöffnung(en) 4 gerade beendet wird.

Der Einlassabstand E ist also der Abstand der Oberseite 21 des Kolbens 2 von der Gaseinlassöffnung 4 beim Ende der Gaseinbringung.

Erfindungsgemäss beträgt der Einlassabstand E mindestens 14% des Hubs S. Das heisst, beim Ende der Gaseinbringung ist die Oberseite 21 des Kolbens 2 noch mindestens 14% des Hubs S von der Gaseinlassöffnung 4 entfernt. Durch dieses auf den Arbeitszyklus sehr frühe Beendigen der Gaseinbringung in den Zylinder 10 ist bei der Beendigung der Gaseinbringung auf der Oberseite 21 des Kolbens 2 ein Luftpolster vorhanden, welches zwischen der Oberseite 21 des Kolbens 2 und dem eingebrachten Gas angeordnet ist. Dieses Luftpolster verhindert - zumindest weitgehend - ein Eindringen des Gases in den ringförmigen Spaltbereich zwischen dem Kolben 2 und der Zylinderwandung 11, welcher nach unten hin durch den ersten Kolbenring 22 begrenzt wird. Das Luftpolster reduziert somit die thermische Belastung sowohl der Oberseite 21 des Kolbens 2 als auch des ersten Kolbenrings 22 als auch der Kolbennut 23.

Der optimale Wert für den Einlassabstand E hängt vom speziellen Anwendungsfall des erfindungsgemässen Verfahrens ab und insbesondere auch von der Ausgestaltung des Grossdieselmotors, welcher mit dem erfindungsgemässen Verfahren betrieben wird.

In der Praxis hat es sich gezeigt, dass bei manchen Anwendungen des erfindungsgemässen Verfahrens vorteilhaft ist, wenn der Einlassabstand E mindestens 18% des Hubs S beträgt.

Bei manchen Anwendungen ist es vorteilhaft, wenn der Einlassabstand E mindestens 20% des Hubs S beträgt.

Bei manchen Anwendungen ist es vorteilhaft, wenn der Einlassabstand E mindestens 23% des Hubs S beträgt.

Bei manchen Anwendungen ist es vorteilhaft, wenn der Einlassabstand E mindestens 26% des Hubs S beträgt.

Bei manchen Anwendungen ist es vorteilhaft, wenn der Einlassabstand E mindestens 29% des Hubs S beträgt.

Auch hat es sich in der Praxis als vorteilhaft erwiesen, wenn der Einlassabstand E nicht zu gross gewählt wird, weil sonst die Gefahr besteht, dass es zu einem erheblichen Methanschlupf kommt.

Daher ist es bevorzugt, dass der Einlassabstand E höchstens 35% des Hubs S beträgt.

Für manche Anwendungen ist es vorteilhaft, dass der Einlassabstand E höchstens 33% des Hubs S beträgt.

Da für das Einbringen der für die Verbrennung benötigten Gasmenge in den Zylinder 10 eine Zeit benötigt wird, wird mit dem Einbringen des Gases vorzugsweise bei einem Einlasswinkel begonnen, der vorzugsweise 10° bis 25° kleiner ist als derjenige Kurbelwinkel, bei welchem sich der Kolben 2 im Einlassabstand E befindet. Der Einlasswinkel gibt also den Kurbelwinkel an, bei welchem mit dem Öffnen der Gaseinlassöffnungen 4 begonnen wird, bzw. den Kurbelwinkel, bei welchem das Einbringen das Gases in den Zylinder 10 beginnt. Folglich erfolgt das Einbringen des Gases in den Zylinder über einen Kurbelwinkelbereich von vorzugsweise mindestens 10° und höchstens 25°.

Für manche Anwendungen ist es bevorzugt, dass der Einlasswinkel mindestens 15° und höchstens 20° kleiner ist als der Kurbelwinkel, bei welchem sich der Kolben 2 im Einlassabstand E befindet.

## Patentansprüche

1. Verfahren zum Betreiben eines Grossdieselmotors, welcher als Dual-Fuel Grossdieselmotor ausgestaltet ist, der in einem Flüssigmodus betreibbar ist, in welchem ein flüssiger Brennstoff zur Verbrennung in einen Zylinder (10) eingebracht wird, und der ferner in einem Gasmodus betreibbar ist, in welchem ein Gas als Brennstoff in den Zylinder (10) eingebracht wird, wobei der Grossdieselmotor mindestens einen Zylinder (10) umfasst, in welchem ein Kolben (2) entlang einer Zylinderwandung (11) in einer axialen Richtung (A) zwischen einem unteren Umkehrpunkt (UT) und einem oberen Umkehrpunkt (OT) hin- und herbewegbar angeordnet ist, wobei der Kolben (2) eine Oberseite (21) zum Begrenzen eines Brennraums (13) im Zylinder (10) aufweist, wobei in der Zylinderwandung (11) mindestens eine Gaseinlassöffnung (4) vorgesehen ist, durch welche im Gasmodus das Gas als Brennstoff in den Zylinder (10) eingebracht wird, **dadurch gekennzeichnet, dass** im Gasmodus das Einbringen des Gases bei einem Einlassabstand (E) beendet wird, **dadurch gekennzeichnet, dass** der Einlassabstand (E) die Entfernung der Oberseite (21) des Kolbens (2) von der Gaseinlassöffnung (4) in axialer Richtung (A) angibt, und wobei der Einlassabstand (E) mindestens 14% des Hubs (S) beträgt, welcher durch die Differenz der Position der Oberseite (21) des Kolbens (2) im oberen Umkehrpunkt (OT) und im unteren Umkehrpunkt (UT) festgelegt ist.

2. Verfahren nach Anspruch 1, bei welchem der Einlassabstand (E) mindestens 18% des Hubs (S) beträgt.

3. Verfahren nach einem der vorangehenden Ansprüche, bei welchem der Einlassabstand (E) mindestens 20% des Hubs (S) beträgt.

4. Verfahren nach einem der vorangehenden Ansprüche, bei welchem der Einlassabstand (E) mindestens 23% des Hubs (S) beträgt.

5. Verfahren nach einem der vorangehenden Ansprüche, bei welchem der Einlassabstand (E) mindestens 26% des Hubs (S) beträgt.

6. Verfahren nach einem der vorangehenden Ansprüche, bei welchem der Einlassabstand (E) mindestens 29% des Hubs (S) beträgt.

7. Verfahren nach einem der vorangehenden Ansprüche, bei welchem der Einlassabstand (E) höchstens 35% des Hubs (S) beträgt.

8. Verfahren nach einem der vorangehenden Ansprüche, bei welchem der Einlassabstand (E) höchstens 33% des Hubs (S) beträgt.

9. Verfahren nach einem der vorangehenden Ansprüche, bei welchem mit dem Einbringen des Gases bei einem Einlasswinkel begonnen wird, wobei der Einlasswinkel denjenigen Kurbelwinkel angibt, bei welchem mit dem Öffnen der Gaseinlassöffnung (4) begonnen wird, und wobei der Einlasswinkel 10° bis 25° kleiner ist als der Kurbelwinkel, bei welchem sich der Kolben (2) im Einlassabstand (E) befindet.

10. Verfahren nach Anspruch 9, wobei der Einlasswinkel 15° bis 20° kleiner ist als der Kurbelwinkel, bei welchem sich der Kolben (2) im Einlassabstand (E) befindet.

11. Verfahren nach einem der vorangehenden Ansprüche, bei welchem ein Auslassventil (3) zum Austragen von Verbrennungsgasen aus dem Zylinder (10) geschlossen wird, bevor mit der Einbringung des Gases in den Zylinder (10) begonnen wird.

12. Verfahren nach einem der vorangehenden Ansprüche, bei welchem zwei Gaseinlassöffnungen (4) vorgesehen sind, welche auf der gleichen Höhe (H) bezüglich der axialen Richtung (A) angeordnet sind.

13. Verfahren nach einem der vorangehenden Ansprüche, bei welchem jede Gaseinlassöffnung (4) bezüglich der axialen Richtung (A) auf einer Höhe (H) angeordnet ist, die 40% bis 55% des Hubs (S) beträgt, wobei die Höhe (H) von der Position der Oberseite (21) des Kolbens (2) gemessen wird, wenn sich der Kolben (2) im unteren Umkehrpunkt (UT) befindet.

14. Grossdieselmotor, **dadurch gekennzeichnet, dass** der Grossdieselmotor mit einem Verfahren gemäss einem der vorangehenden Ansprüche betrieben wird.

15. Grossdieselmotor nach Anspruch 14, ausgestaltet als längsgespülter Zweitakt-Grossdieselmotor.

## Claims

1. A method for operating a large diesel engine, which is designed as a dual-fuel large diesel engine, which can be operated in a liquid mode in which a liquid fuel is introduced into a cylinder (10) for combustion, and which can be further operated in a gas mode in which a gas is introduced into the cylinder (10) as fuel, wherein the large diesel engine comprises at least one cylinder (10) in which a piston (2) is arranged movable back and forth along a cylinder wall (11) in an axial direction between a lower reversal point (UT) and an upper reversal point (OT), wherein the piston (2) has an upper side (21) for delimiting a combustion chamber (13) in the cylinder (10), wherein at least one gas inlet opening (4) is provided in the cylinder wall (11), through which opening the gas is introduced into the cylinder (10) as fuel in gas mode, wherein in gas mode, the introduction of the gas is terminated at an inlet distance (E), **characterized in that** the inlet distance (E) indicates the distance of the upper side (21) of the piston (2) from the gas inlet opening (4) in the axial direction (A), and wherein the inlet distance (E) is at least 14% of the stroke (S), which is defined by the difference in position of the upper side (21) of the piston (2) at the upper reversal point (OT) and at the lower reversal point (UT).

2. A method according to claim 1, in which the inlet distance (E) is at least 18% of the stroke (S).

3. A method according to anyone of the preceding claims, in which the inlet distance (E) is at least 20% of the stroke (S).

4. A method according to anyone of the preceding claims, in which the inlet distance (E) is at least 23% of the stroke (S).

5. A method according to anyone of the preceding claims, in which the inlet distance (E) is at least 26% of the stroke (S).

6. A method according to anyone of the preceding claims, in which the inlet distance (E) is at least 29% of the stroke (S).

7. A method according to anyone of the preceding claims, in which the inlet distance (E) is at most 35% of the stroke (S).

8. A method according to anyone of the preceding claims, in which the inlet distance (E) is at most 33% of the stroke (S).

9. A method according to anyone of the preceding claims, in which the introduction of the gas is started at an inlet angle, wherein the inlet angle indicates that crank angle at which the opening of the gas inlet opening (4) is started, and wherein the inlet angle is 10° to 25° smaller than the crank angle at which the piston (2) is located at the inlet distance (E).

10. A method according to claim 9, wherein the inlet angle is 15° to 20° smaller than the crank angle at which the piston (2) is located at the inlet distance (E).

11. A method according to anyone of the preceding claims, in which an outlet valve (3) for discharging combustion gases from the cylinder (10) is closed before starting to introduce the gas into the cylinder (10).

12. A method according to anyone of the preceding claims, in which two gas inlet openings (4) are provided, which are arranged at the same height (H) with respect to the axial direction (A).

13. A method according to anyone of the preceding claims, in which each gas inlet opening (4) is arranged with respect to the axial direction (A) at a height (H) that is 40% to 55% of the stroke (S), the height (H) being measured from the position of the upper side (21) of the piston (2) when the piston (2) is at the lower reversal point (UT).

14. A large diesel engine, **characterized in that** the large diesel engine is operated by a method according to anyone of the preceding claims.

15. A large diesel engine according to claim 14, designed as a longitudinally scavenged two-stroke large diesel engine.

## Revendications

1. Procédé pour faire fonctionner un gros moteur diesel, qui est conçu comme un gros moteur diesel à deux carburant, qui peut fonctionner dans un mode liquide, dans lequel un combustible liquide est introduit dans un cylindre (10) pour la combustion, et qui peut en outre fonctionner dans un mode gaz, dans lequel un gaz est introduit dans le cylindre (10) comme combustible, dans lequel le gros moteur diesel comprend au moins un cylindre (10), dans lequel un piston (2) est disposé de manière à pouvoir effectuer un mouvement de va-et-vient le long d'une paroi de cylindre (11) dans une direction axiale (A) entre un point d'inversion inférieur (UT) et un point d'inversion supérieur (OT), dans lequel le piston (2) présente une face supérieure (21) pour délimiter une chambre de combustion (13) dans le cylindre (10), dans lequel au moins une ouverture d'entrée du gaz (4) est prévue dans la paroi de cylindre (11), à travers laquelle, en mode gaz, le gaz est introduit dans le cylindre (10) en tant que combustible, **caractérisé en ce que**, en mode gaz, l'introduction du gaz est terminée à une distance d'entrée (E), **caractérisé en ce que** la distance d'entrée (E) indique la distance de la face supérieure (21) du piston (2) par rapport à l'ouverture d'entrée du gaz (4) dans la direction axiale (A), et dans lequel la distance d'entrée (E) représente au moins 14 % de la course (S) définie par la différence de position de la face supérieure (21) du piston (2) au point d'inversion supérieur (OT) et au point d'inversion inférieur (UT).

2. Procédé selon la revendication 1, dans lequel la distance d'entrée (E) représente au moins 18% de la course (S).

3. Procédé selon l'une quelconque des revendications précédentes, dans lequel la distance d'entrée (E) représente au moins 20% de la course (S).

4. Procédé selon l'une quelconque des revendications précédentes, dans lequel la distance d'entrée (E) représente au moins 23% de la course (S).

5. Procédé selon l'une quelconque des revendications précédentes, dans lequel la distance d'entrée (E) représente au moins 26% de la course (S).

6. Procédé selon l'une quelconque des revendications précédentes, dans lequel la distance d'entrée (E) représente au moins 29% de la course (S).

7. Procédé selon l'une quelconque des revendications précédentes, dans lequel la distance d'entrée (E) représente au plus 35% de la course (S).

8. Procédé selon l'une quelconque des revendications précédentes, dans lequel la distance d'entrée (E) représente au plus 33% de la course (S).

9. Procédé selon l'une quelconque des revendications précédentes, dans lequel on commence à introduire le gaz à un angle d'entrée, dans lequel l'angle d'entrée indique l'angle de vilebrequin auquel on commence à ouvrir l'ouverture d'entrée du gaz (4), et dans lequel l'angle d'entrée est inférieur de 10° à 25° à l'angle de vilebrequin auquel le piston (2) se trouve à la distance d'entrée (E).

10. Procédé selon la revendication 9, dans lequel l'angle d'entrée est inférieur de 15° à 20° à l'angle de vilebrequin auquel le piston (2) se trouve à la distance d'entrée (E).

11. Le procédé selon l'une quelconque des revendications précédentes, dans lequel une soupape de sortie (3) pour décharger les gaz de combustion du cylindre (10) est fermée avant de commencer à introduire le gaz dans le cylindre (10).

12. Procédé selon l'une quelconque des revendications précédentes, dans lequel deux ouvertures d'entrée du gaz (4) sont prévus, lesquels sont disposées à la même hauteur (H) par rapport à la direction axiale (A).

13. Procédé selon l'une quelconque des revendications précédentes, dans lequel chaque ouverture d'entrée du gaz (4) est disposé, par rapport à la direction axiale (A), à une hauteur (H) comprise entre 40% et 55% de la course (S), dans lequel la hauteur (H) est mesurée depuis la position de la face supérieure (21) du piston (2) lorsque le piston (2) est au point d'inversion inférieur (UT).

14. Gros moteur diesel, **caractérisé en ce que** le gros moteur diesel est utilisé avec un procédé selon l'une quelconque des revendications précédentes.

15. Gros moteur diesel selon la revendication 14, conçu comme un gros moteur diesel à deux temps à purge longitudinale.
